# EUROPÄISCHE PATENTANMELDUNG

(11) **EP 4 671 700 A1**
(43) Veröffentlichungstag der Anmeldung: **31.12.2025**
(21) Anmeldenummer: 25177960.9
(22) Anmeldetag: 21.05.2025
(51) Int. Cl.: G01F 1/60, G01F 25/10, G01N 27/10

(54) **VERFAHREN ZUM BETREIBEN EINES MAGNETISCH-INDUKTIVEN DURCHFLUSSMESSGERÄTS UND MAGNETISCH-INDUKTIVES DURCHFLUSSMESSGERÄT**

(30) Priorität: 28.06.2024 DE 102024118322
(71) Anmelder: Krohne AG, 4019 Basel (CH)
(72) Erfinder: Reijnders, Guus, 4754 AK Stampersgat (NL); den Haan, Arthur, 2311 VH Leiden (NL); Stevenhagen, Robin, 3145 AL Maassluis (NL)
(74) Vertreter: Gesthuysen Patentanwälte

(57) **Zusammenfassung**

Dargestellt und beschrieben sind ein Verfahren (1) zum Betreiben eines magnetisch-induktiven Durchflussmessgeräts (2), wobei das magnetisch-induktive Durchflussmessgerät (2) wenigstens ein Messrohr (3) mit einem Einströmbereich (3a), einem Ausströmbereich (3b) und mit einem zwischen dem Einströmbereich (3a) und dem Ausströmbereich (3b) liegenden Messbereich (3c) zum Führen eines strömenden Mediums (4) durch das Durchflussmessgerät (2), wenigstens eine Magnetfelderzeugungseinrichtung (5) zum Erzeugen eines das Messrohr (3) im Messbereich (3c) senkrecht zur Strömungsrichtung des Mediums (4) durchsetzenden Magnetfeldes (B), wenigstens ein Messelektrodenpaar (6a, 6b) im Messbereich (3c) des Messrohrs (3) zum Abgreifen einer in dem Medium (4) im Messrohr (3) induzierten elektrischen Spannung (Uind), und wenigstens eine Steuer- und Auswerteeinheit (7) umfasst, die in einem Durchflussmessbetrieb aus der gemessenen induzierten elektrischen Spannung (Uind) einen Durchflussmesswert (F) ermittelt.

In einem Leitfähigkeitsmessbetrieb wird ein Messstrom (Im) über Stromkreiselektroden (8a, 8b) in das Medium (4) in dem Messrohr (3) eingespeist, und anhand einer mittels wenigstens einer der Messelektroden (6a, 6b) aufgenommenen Messelektrodenspannung (Uel, Ue2) ermittelt die Steuer- und Auswerteeinheit (7) die elektrische Leitfähigkeit (sigma) des Mediums (4) in dem Messrohr (3).

## Beschreibung

Die Erfindung betrifft ein Verfahren zum Betreiben eines magnetisch-induktiven Durchflussmessgeräts, wobei das magnetisch-induktive Durchflussmessgerät wenigstens ein Messrohr mit einem Einströmbereich, einem Ausströmbereich und mit einem zwischen dem Einströmbereich und dem Ausströmbereich liegenden Messbereich zum Führen eines strömenden Mediums durch das Durchflussmessgerät, wenigstens eine Magnetfelderzeugungseinrichtung zum Erzeugen eines das Messrohr im Messbereich senkrecht zur Strömungsrichtung des Mediums durchsetzenden Magnetfeldes, wenigstens ein Messelektrodenpaar im Messbereich des Messrohrs zum Abgreifen einer in dem Medium im Messrohr induzierten elektrischen Spannung, und wenigstens eine Steuer- und Auswerteeinheit umfasst, die in einem Durchflussmessbetrieb aus der gemessenen induzierten elektrischen Spannung einen Durchflussmesswert ermittelt. Darüber hinaus betrifft die Erfindung auch ein solches magnetisch-induktives Durchflussmessgerät.

Die zuvor genannten Durchflussmessgeräte, die auf dem magnetisch-induktiven Messprinzip beruhen, sind seit Jahrzehnten bekannt. Folglich sind auch Verfahren zum Betreiben solcher Durchflussmessgeräte, wie sie zuvor beschrieben worden sind, seit Langem bekannt. Das magnetisch-induktive Messprinzip beruht auf der Kraftwirkung auf Ladungsträger, die sich senkrecht zu einem Magnetfeld bewegen bzw. die eine Bewegungskomponente senkrecht zu dem betreffenden Magnetfeld haben (Lorentzkraft). Um im "Normalbetrieb" des Durchflussmessgeräts, also im Durchflussmessbetrieb, eine Durchflussmessung auf diesem Prinzip beruhend durchführen zu können, muss das in dem Messrohr geführte Medium eine elektrische Mindestleitfähigkeit aufweisen. Je schneller sich das Medium durch das Messrohr und damit auch durch das von der Magnetfelderzeugungseinrichtung erzeugte Magnetfeld bewegt, desto stärker erfolgt eine Trennung von Ladungsträgern in dem strömenden Medium des entsprechenden Messrohrabschnitts, und umso stärker wird ein durch die Ladungstrennung bewirktes elektrisches Feld, das sich zwischen den Elektroden des Messrohrs ausbildet und als induzierte elektrische Spannung zwischen den Messelektroden abgenommen werden kann. Die induzierte Spannung zwischen den Messelektroden entwickelt sich proportional zur Strömungsgeschwindigkeit, jedenfalls in dem Zeitraum, in dem das Magnetfeld konstant ist.

Es ist bekannt, magnetisch-induktive Durchflussmessgeräte nicht nur zur Ermittlung ihrer primären Messgröße einzusetzen, also eines Durchflussmesswertes im Durchflussmessbetrieb, sondern auch zur Ermittlung von sekundären Messgrößen, wie zum Beispiel eines Messwertes der elektrischen Leitfähigkeit (in 1/Ohmmeter) des durch das Durchflussmessgerät strömenden Mediums. Die elektrische Leitfähigkeit ist ein Materialparameter des Mediums, ihr Kehrwert ist der spezifische elektrische Widerstand des Mediums (in Ohmmeter). Eine Information über die Leitfähigkeit des Mediums kann aus verschiedenen Gründen interessant sein, zum einen, weil zur Erfassung von Durchflussinformationen eine gewisse Mindestleitfähigkeit des Mediums vorhanden sein muss, zum anderen kann die Mediumleitfähigkeit auch eine relevante Prozessgröße sein, die zu erfassen demzufolge von Bedeutung ist. Die DE 10 2014 007 426 A1 beschreibt ein Verfahren zur Bestimmung der elektrischen Leitfähigkeit des Mediums, bei dem über die Messelektroden des magnetisch-induktiven Durchflussmessgeräts ein Signal zur Bestimmung der Leitfähigkeit des Mediums in das Medium eingespeist wird.

Aufgabe der vorliegenden Erfindung ist es, ein verbessertes Verfahren zur Bestimmung der elektrischen Leitfähigkeit eines Mediums mit einem magnetisch-induktiven Durchflussmessgerät anzugeben.

Die Aufgabe ist bei dem eingangs beschriebenen Verfahren und dem diesbezüglich ausgebildeten magnetisch-induktiven Durchflussmessgerät zunächst dadurch gelöst, dass im Bereich des Messrohrs mit Kontakt zum Medium zumindest bei vollständig mediumgefüllten Messrohr eine erste Stromkreiselektrode und eine zweite Stromkreiselektrode angeordnet sind, dass die Stromkreiselektroden außerhalb des Messrohres mit einer Stromquelle verbunden sind und in einem Leitfähigkeitsmessbetrieb mit einem Messstrom beaufschlagt werden, wobei die Stromkreiselektroden so angeordnet sind, dass sich der Stromkreis zumindest bei vollständig mediumgefülltem Messrohr im Medium über einen Mediumstrompfad schließt, wobei der Mediumstrompfad den Strömungsquerschnitt des Messrohrs, in dem die Messelektroden liegen, passiert, sodass sich ein elektrischer Spannungsabfall zwischen den Stromkreiselektroden im Medium ergibt. Im Leitfähigkeitsmessbetrieb wird wenigstens eine Messelektrodenspannung mit wenigstens einer der Messelektroden erfasst und die Steuer- und Auswerteeinheit bestimmt aus der erfassten Messelektrodenspannung die elektrische Leitfähigkeit des Mediums in dem Messrohr.

Bei dem erfindungsgemäßen Verfahren hat es sich als vorteilhaft herausgestellt, dass die Messelektroden, die im Durchflussmessbetrieb zur Erfassung der im Medium induzierten elektrischen Spannung dienen, im Leitfähigkeitsmessbetrieb nicht dazu verwendet werden, ein für die Leitfähigkeitsmessung geeignetes Messsignal in das Medium einzuspeisen, dazu sind die von den Messelektroden verschiedenen Stromkreiselektroden vorgesehen. Ein Grund liegt darin, dass ein Stromfluss über die Messelektroden unerwünschte elektrochemische Effekte an den Messelektroden zur Folge haben kann, die sich nachteilig auf die Durchflussmessung auswirken können. Ein weiterer Vorteil der erfindungsgemäßen Lösung liegt in der Vermeidung einer aufwendigen schaltungstechnischen Lösung, um eine empfindliche Spannungsmessung auf der einen Seite und die Einbringung eines robusten Messsignals auf der anderen Seite über die Messelektroden miteinander zu vereinbaren. Bei dem erfindungsgemäßen Verfahren geht es grundsätzlich nicht um den Primärmessbetrieb des magnetisch-induktiven Durchflussmessgerät, also den Durchflussmessbetrieb, sondern um den sekundären Messbetrieb, also den Leitfähigkeitsmessbetrieb, auch wenn dies nicht jedes Mal hervorgehoben werden sollte.

Die erfindungsgemäße Lösung, bei der im Leitfähigkeitsmessbetrieb das Medium über - von den Messelektroden verschiedene - Stromkreiselektroden mit einem Messstrom beaufschlagt wird, vermeidet die aufgezeigten Problempunkte und ermöglicht zudem, dass mit den Messelektroden, die prinzipbedingt mit der Möglichkeit der hochempfindlichen Spannungsmessung im Zusammenhang stehen sind, auch die relevante Messgröße präzise erfasst werden kann, nämlich eine Messelektrodenspannung verursacht durch den eingeprägten Messstrom im Medium, mit deren Hilfe schließlich die elektrische Leitfähigkeit des Mediums bestimmt wird.

Nach der hier getroffenen Definition verläuft das Messrohr über die gesamte Erstreckung des Durchflussmessgeräts, vom Einströmbereich zum Ausströmbereich einschließlich eventuell vorhandener Anschlüsse zur Montage des Durchflussmessgeräts insoweit diese auch mediumführend sind. Das magnetisch-induktive Durchflussmessgerät wird üblicherweise so verbaut, dass die Messelektroden auf einer waagerechten Verbindungslinie liegen und die Magnetfelderzeugungseinrichtung dazu senkrecht ein vertikales Magnetfeld erzeugt, also in Richtung des Erdschwerefeldes. Im normalen Messbetrieb ist das Durchflussmessgerät von dem Medium vollständig ausgefüllt und durchströmt. Auf dieser Annahme beruht auch die Ermittlung des Durchflussmesswertes.

Bei einem vollständig mediumgefüllten Messrohr können die Stromkreiselektroden praktisch überall im Bereich des Messrohrs angeordnet werden, sie müssen lediglich Kontakt zum Medium haben, damit im Leitfähigkeitsmessbetrieb der über die Stromkreiselektroden in das Medium eingespeiste Messstrom über seinen Mediumstrompfad einen geschlossenen Stromkreis bilden kann. Die Stromkreiselektroden müssen im Bereich des Messrohrs so angeordnet sein, dass der Messstrompfad den Bereich der Messelektroden passiert, damit der Messstrom einen messtechnisch detektierbaren Einfluss auf die Messelektroden hat und so überhaupt die elektrische Leitfähigkeit des Mediums im Messrohr bestimmt werden kann.

Wenn ein konstanter Messstrom über die Stromkreiselektroden in das Medium eingeprägt wird, dann ist dazu in Abhängigkeit von der Leitfähigkeit des Mediums eine unterschiedlich große Spannung von der Stromquelle aufzubringen. Die variierende Spannung ist dann über die Messelektroden erkennbar und aus der sich in Abhängigkeit von der elektrischen Leitfähigkeit des Mediums einzustellenden Spannung lässt sich dann auf die elektrische Leitfähigkeit des Mediums schließen. Im Grunde geht es also um die Messung eines elektrischen Widerstandes, der Rückschluss auf die elektrische Leitfähigkeit des Mediums zulässt.

Bei einer vorteilhaften Weiterbildung des Verfahrens ist vorgesehen, dass die erste Stromkreiselektrode von der Stromquelle auf ein Einspeisepotenzial gelegt wird und die zweite Stromkreiselektrode auf ein Referenzpotenzial gelegt wird, insbesondere wobei das Referenzpotenzial das elektrische Bezugspotenzial ist, auf das bezogen auch die Messelektrodenspannungen gemessen werden. Vorteilhaft handelt es sich bei dem Referenzpotential um die elektrische Masse der Messschaltung des Durchflussmessgeräts.

Bei einer bevorzugten Ausgestaltung des Verfahrens erzeugt die Stromquelle einen Wechselstrom mit konstanter Amplitude als Messstrom, insbesondere wobei dann die interessierende Größe der Messelektrodenspannung im Leitfähigkeitsmessbetrieb die Amplitude der Messelektrodenspannung ist. Der Einsatz eines Wechselstroms hat den Vorteil, dass mit einem Gleichstrom bzw. einer Gleichspannung möglicherweise verbundene elektrochemische Effekte an den Elektroden, hier also den Stromkreiselektroden, vermieden werden. Die Messelektronik, die die Messelektrodenspannung auswertet, ist ohnehin auch dazu eingerichtet, Wechselspannungen zu erfassen, da auch die Polarität der in dem Medium induzierten elektrischen Spannung ihr Vorzeichen wechselt aufgrund des üblicherweise in seiner Polarität wechselnden Magnetfeldes der Magnetfelderzeugungseinrichtung. Eine alternative Variante des Verfahrens besteht darin, dass die Stromquelle einen Gleichstrom mit konstanter Höhe erzeugt, wobei dann die interessierende Größe der Messelektrodenspannung im Leitfähigkeitsmessbetrieb die Höhe der Messelektrodenspannung ist.

Vorzugsweise wird während des Leitfähigkeitsmessbetriebs der Durchflussmessbetrieb ausgesetzt, insbesondere wird die Magnetfelderzeugungseinrichtung nicht bestromt, sodass während der Leitfähigkeitsmessung kein Magnetfeld erzeugt und damit in dem strömenden Medium auch keine Spannung induziert wird. Damit werden gegenseitige Beeinflussungen der verschiedenen Betriebsarten sicher vermieden.

Bei einer alternativen Ausgestaltung des Verfahrens wird der Leitfähigkeitsmessbetrieb zeitgleich zum Durchflussmessbetrieb durchgeführt, also auch während die Magnetfelderzeugungseinrichtung bestromt wird. Üblicherweise wird die Magnetfelderzeugungseinrichtung mit einer bestimmten Frequenz in unterschiedlicher Richtung bestromt, sodass ein Magnetfeld resultiert, dessen Polarität sich mit der Umschaltfrequenz der Magnetfelderzeugungseinrichtung ändert. Die Magnetfeldstärke kann sich nicht abrupt ändern, da sich der Strom durch die Magnetfelderzeugungseinrichtung, die naturgemäß eine gewisse Induktivität aufweist, auch nur stetig ändern kann. Beim Umschalten der Bestromungsrichtung baut sich das Magnetfeld in der einen Richtung ab, wird zu Null und baut sich in der anderen Richtung wieder auf, bis es nach dieser transienten Phase stationär wird. Während das Magnetfeld stationär ist, wird von den Messelektroden eine Mehrzahl von Werten für die in dem Medium induzierte elektrischen Spannung erfasst, aus denen der interessierende Durchflussmesswert errechnet wird (Durchflussmessbetrieb). Es hat sich als vorteilhaft herausgestellt, wenn die Leitfähigkeitsmessung entweder direkt zu Beginn der Umschaltung der Bestromungsrichtung, also zu Beginn der transienten Phase der Magnetfeldumschaltung durchgeführt wird, in der also ohnehin keine Messwerte für den Durchfluss erfasst werden, oder aber ganz am Ende der stationären Phase des Magnetfeldes (und damit kurz vor der Umschaltung der Bestromungsrichtung), sodass nur wenige Messwerte betroffen sind, die für die Durchflussbestimmung relevant sind, d. h. nur wenige Werte für die Durchflussmessung entfallen bei der Durchführung der Leitfähigkeitsmessung.

Bei einer weiteren vorteilhaften Ausgestaltung des Verfahrens wird der Zusammenhang zwischen der im Leitfähigkeitsmessbetrieb erfassten Messelektrodenspannung und der elektrischen Leitfähigkeit des Mediums in dem Messrohr durch Kalibrierung des Durchflussmessgeräts mit mehreren Medien unterschiedlicher elektrischer Leitfähigkeit hergestellt. Dies ist eine pragmatische und unkomplizierte Herangehensweise, mit der gute Ergebnisse erzielbar sind. Es ist auch möglich, den gewünschten Zusammenhang auf analytischem Wege zu versuchen herzustellen, indem die Materialgleichung, die den Zusammenhang zwischen der elektrischen Stromdichte und der elektrischen Feldstärke mittels der elektrischen Leitfähigkeit des Mediums ausdrückt, über den Raumbereich des Messrohrs integriert wird, was aber allein aufgrund der Messrohrgeometrien im Allgemeinen nur numerisch lösbar ist. Im Ergebnis ist die Kalibrierung mit Medien bekannter elektrischer Leitfähigkeit erheblich einfacher und schließlich auch zuverlässiger.

Im Zusammenhang mit der vorgenannten Kalibrierung ist des Weiteren vorgesehen, dass als mathematische Annäherung des Zusammenhangs zwischen der im Leitfähigkeitsmessbetrieb erfassten Messelektrodenspannung und der elektrischen Leitfähigkeit des Mediums in dem Messrohr ein linearer Zusammenhang gewählt wird zwischen der Messelektrodenspannung und dem Kehrwert der elektrischen Leitfähigkeit des Mediums (also dem spezifischen elektrischen Widerstands des Mediums). Insbesondere wird durch mehrere Kalibrierwertepaare von Messelektrodenspannung und zugehörigem Kehrwert der Leitfähigkeit des Mediums eine Ausgleichskurve, insbesondere eine Ausgleichgerade, gelegt und die Ausgleichskurve wird verwendet zur Bestimmung der elektrischen Leitfähigkeit des Mediums in Abhängigkeit von der erfassten Messelektrodenspannung im Leitfähigkeitsmessbetrieb.

Eine weitere Verbesserung des Verfahrens ist dadurch gekennzeichnet, dass im Leitfähigkeitsmessbetrieb der von der Stromquelle abgegebene Messstrom messtechnisch erfasst wird. Bei Abweichung des gemessenen Messstroms von einem der Stromquelle vorgegebenen Soll-Messstrom oder bei Unterschreitung eines vorgegebenen Mindeststroms wird die Leitfähigkeitsmessung bzw. der Leitfähigkeitsmessbetrieb als fehlerhaft erkannt. Die Fehlererkennung beruht darauf, dass auch bei schlecht leitfähigen Medien doch ein Mindeststrom in das Medium einprägbar sein sollte. Insbesondere wird der erkannte Fehlerstatus nach außen signalisiert, also beispielsweise auf einer Anzeige angezeigt oder als Fehlernachricht über eine Signalschnittstelle nach außerhalb des Durchflussmessgeräts übertragen.

Eine weitere Verbesserung des Verfahrens hinsichtlich einer Messgeräte-Diagnose zeichnet sich dadurch aus, dass im Leitfähigkeitsmessbetrieb die Einspeisespannung an der ersten Stromkreiselektrode messtechnisch erfasst wird. In dem Fall, dass die gemessene Einspeisespannung einen vorgegebenen Maximalwert für die Einspeisespannung überschreitet, wird die Leitfähigkeitsmessung als fehlerhaft erkannt. Auch hier wird der erkannte Fehlerstatus vorzugsweise nach außen signalisiert, insbesondere wird der auf einer Anzeige angezeigt oder als Fehlernachricht über eine Signalschnittstelle nach außerhalb des Durchflussmessgeräts übertragen. Ein solcher Fehlerfall kann verursacht werden durch einen unterbrochenen Leitfähigkeitsstromkreis, beispielsweise durch eine trockenliegende Stromkreiselektrode.

Eine andere Weiterentwicklung des Verfahrens sieht vor, dass der Messstrom mit einem charakteristischen Zeitverlauf versehen wird und überprüft wird, ob im Leitfähigkeitsmessbetrieb die erfasste Messelektrodenspannung einen entsprechenden charakteristischen Zeitverlauf hat. Bei Abweichung der Zeitverläufe von Messstrom und Messelektrodenspannung wird die Leitfähigkeitsmessung als fehlerhaft erkannt, insbesondere wobei der erkannte Fehlerstatus nach außen signalisiert wird. Ein charakteristischer Zeitverlauf kann zum Beispiel eine Sinusschwingung mit konstanter oder zeitveränderlicher Frequenz sein, eine Sägezahnkurve oder eine Folge von Rechtecksignalen. Es sind viele weitere charakteristische Zeitverläufe denkbar, von Vorteil ist sicherlich, wenn der gewählte Zeitverlauf recht einfach identifizierbar ist.

Eine noch andere Weiterentwicklung des Verfahrens zeichnet sich dadurch aus, dass im Leitfähigkeitsmessbetrieb zwei Messelektrodenspannungen mit den beiden Messelektroden erfasst werden und die beiden Messelektrodenspannungen miteinander verglichen werden. Auch hier wird bei Abweichung der beiden Messelektrodenspannungen über eine Abweichungsschwelle hinaus die Leitfähigkeitsmessung als fehlerhaft erkannt, insbesondere wird der erkannte Fehlerstatus nach außen signalisiert. Ganz allgemein wird ein erkannter Fehlerstatus vorzugsweise auf einer Anzeige angezeigt oder als Fehlernachricht über eine Signalschnittstelle nach außerhalb des Durchflussmessgeräts übertragen.

Die beschriebenen Verfahren sind sämtlich realisiert bei magnetisch-induktiven Durchflussmessgeräten des eingangs genannten Typs. Um das erfindungsgemäße Verfahren durchführen zu können, sind bei den entsprechenden erfindungsgemäßen Durchflussmessgeräten im Bereich des Messrohrs mit Kontakt zum Medium zumindest bei vollständig mediumgefüllten Messrohr eine erste Stromkreiselektrode und eine zweite Stromkreiselektrode angeordnet, wobei die Stromkreiselektroden außerhalb des Messrohres mit einer Stromquelle verbunden sind und die Stromquelle in einem Leitfähigkeitsmessbetrieb die Stromkreiselektroden mit einem Messstrom beaufschlagt.

Wie dargelegt, ist es erforderlich, dass die Stromkreiselektroden so angeordnet sind, dass sich ein Stromkreis zumindest bei vollständig mediumgefülltem Messrohr im Medium über einen Mediumstrompfad schließt, wobei der Mediumstrompfad den Strömungsquerschnitt des Messrohrs, in dem die Messelektroden liegen, passiert. Bei allen magnetisch-induktiven Durchflussmessgeräten ist die Steuer- und Auswerteeinheit so ausgestaltet, dass sie in dem Leitfähigkeitsmessbetrieb das Verfahren zur Realisierung des Leitfähigkeitsmessbetriebs ausführt.

Erfindungsgemäße magnetisch-induktive Durchflussmessgeräte können in unterschiedlicher Weise konstruktiv ausgestaltet werden. Bei einer vorteilhaften Ausgestaltung ist vorgesehen, dass wenigstens eine der Stromkreiselektroden als endseitiger leitfähiger Flansch des Messrohrs (mit Mediumkontakt) ausgebildet ist.

In diesem Zusammenhang zeichnet sich eine vorteilhafte Weiterbildung des magnetisch-induktiven Durchflussmessgeräts dadurch aus, dass beide Stromkreiselektroden als endseitiger leitfähiger Flansch des Messrohrs ausgebildet sind, wobei die erste oder die zweite Stromkreiselektrode als der eine Flansch im Einströmbereich angeordnet ist und wobei die zweite oder die erste Stromkreiselektrode als der andere Flansch im Ausströmbereich des Messrohrs angeordnet ist.

Ein zu der vorangehenden Ausgestaltung alternatives magnetisch-induktives Durchflussmessgerät ist dadurch gekennzeichnet, dass eine der Stromkreiselektroden sowohl als leitfähiger Flansch im Einströmbereich wie auch als leitfähiger Flansch im Ausströmbereich des Messrohrs ausgebildet ist.

Bei allen Ausgestaltungen, bei denen eine Stromkreiselektrode als Flansch oder als Anschlussstück des magnetisch-induktiven Durchflussmessgeräts ausgebildet ist, bietet es sich an, diese Stromkreiselektrode auf das Referenzpotential zu legen, idealerweise also auf die elektrische Masse des Durchflussmessgeräts.

Bei einer weiteren vorteilhaften Ausgestaltung des magnetisch-induktiven Durchflussmessgeräts ist eine der Stromkreiselektroden im Bereich des Messrohrs axial versetzt zu einer Messelektrodenebene, in der die Messelektroden angeordnet sind und die senkrecht zur axialen Erstreckung des Messrohrs verläuft, angeordnet sind. Bevorzugt ist diese Stromkreiselektrode zwischen dem Einströmbereich und dem Ausströmbereich angeordnet, sie könnte beispielsweise in die Wandung des Messrohrs eingelassen sein, wo sie entsprechend elektrisch isoliert werden muss. Bei einer weiteren Ausgestaltung sind beide Stromkreiselektroden im Bereich des Messrohrs axial versetzt zu der Messelektrodenebene und zwischen dem Einströmbereich und dem Ausströmbereich angeordnet.

Bei einer alternativen Variante des magnetisch-induktiven Durchflussmessgeräts ist eine der Stromkreiselektroden in der Messelektrodenebene angeordnet, auch beide Stromkreiselektroden können in der Messelektrodenebene angeordnet sein. Diese Variante hat fertigungstechnische Vorteile, da nur ein begrenzter Bereich des Messrohrs zur Realisierung der Messelektroden und der Stromkreiselektroden bearbeitet werden muss (insbesondere wenn diese auf einer Umfangslinie des Messrohrs liegen), es hat sich aber herausgestellt, dass bessere Ergebnisse hinsichtlich der Bestimmung der elektrischen Leitfähigkeit des Mediums erzielt werden können, wenn die Stromkreiselektroden axial, also in Strömungsrichtung des Mediums versetzt zu den Messelektroden angeordnet sind, was also den zuvor beschriebenen Ausführungsbeispielen entspricht.

Im Einzelnen gibt es nun eine Vielzahl von Möglichkeiten, das erfindungsgemäße Verfahren und das erfindungsgemäße magnetisch-induktive Durchflussmessgerät auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch ein Verfahren zum Betreiben eines magnetisch-induktiven Durchflussmessgeräts und ein entsprechendes magnetisch-induktives Durchflussmessgerät im Durchflussmessbetrieb, wie aus dem Stand der Technik bekannt,
- Fig. 2a, 2b: schematisch ein Verfahren zum Betreiben eines magnetisch-induktiven Durchflussmessgeräts und ein entsprechendes magnetisch-induktives Durchflussmessgerät in einem neuartigen Leitfähigkeitsmessbetrieb,
- Fig. 3: schematisch Kalibrierwertepaare und Ausgleichskurven zwecks Herstellung eines Zusammenhangs zwischen der Leitfähigkeit des Mediums und einer Messelektrodenspannung,
- Fig. 4: schematisch das zuvor gezeigte Verfahren zum Betreiben eines magnetisch-induktiven Durchflussmessgeräts und das entsprechende magnetisch-induktive Durchflussmessgerät mit zusätzlicher Messung eines von einer Stromquelle abgegebenen Messstroms und einer Einspeisespannung an einer Stromkreiselektrode und
- Fig. 5a-5d: schematisch verschiedene Realisierungen von Stromkreiselektroden in einem magnetisch-induktiven Durchflussmessgerät.

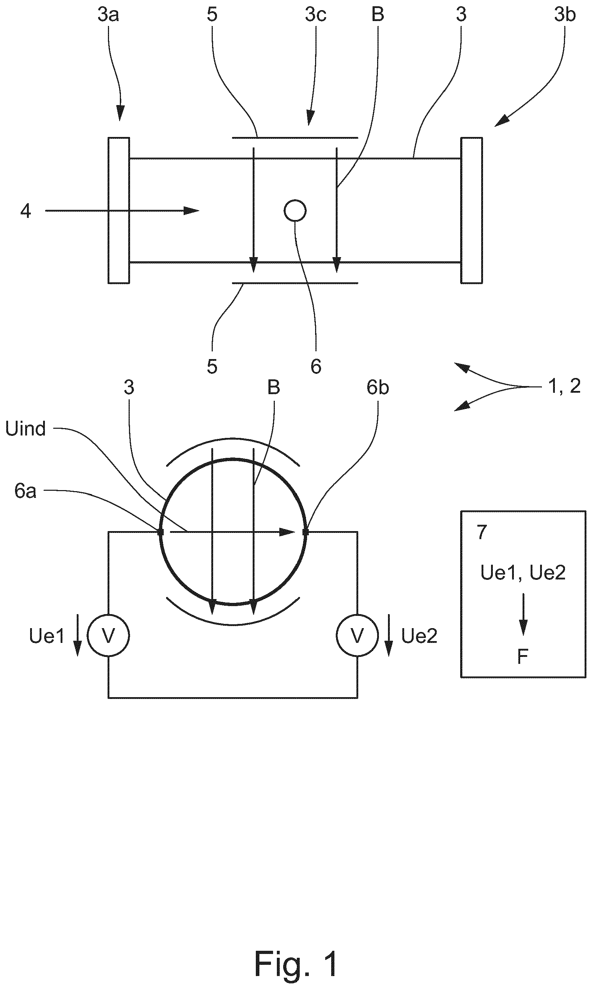

Fig. 1 zeigt ein Verfahren 1 zum Betreiben eines magnetisch-induktiven Durchflussmessgeräts 2 sowie ein magnetisch-induktives Durchflussmessgerät 2, das dieses Verfahren 1 durchführt, wie sie aus dem Stand der Technik bekannt sind. Gezeigt ist der "Normalbetrieb" eines magnetisch-induktiven Durchflussmessgeräts 2, bei dem es um die Durchflussmessung geht.

Das magnetisch-induktive Durchflussmessgerät 2 weist ein Messrohr 3 mit einem Einströmbereich 3a, einem Ausströmbereich 3b und mit einem zwischen dem Einströmbereich 3a und dem Ausströmbereich 3b liegenden Messbereich 3c zum Führen eines strömenden Mediums 4 durch das Durchflussmessgerät 2 auf. Als Messrohr 3 wird also der gesamte zur Führung des Mediumstroms dienende Bereich des Durchflussmessgeräts 2 verstanden, einschließlich etwaiger Anschlussteile, wie den hier angedeuteten Flanschen im Einströmbereich 3a und im Ausströmbereich 3b.

Eine Magnetfelderzeugungseinrichtung 5 erzeugt im Durchflussmessbetrieb ein das Messrohr 3 im Messbereich 3c senkrecht zur Strömungsrichtung des Mediums 4 durchsetzendes Magnetfeld B. In dem Medium 4, das eine elektrische Mindestleitfähigkeit aufweisen muss, damit das Messprinzip funktioniert, wird aufgrund der in dem Magnetfeld B auf bewegte Ladungsträger ausgeübten Lorentzkraft und der dadurch bewirkten Ladungstrennung eine elektrische Spannung Uind induziert. Die induzierte elektrische Spannung Uind ist proportional zur mittleren Strömungsgeschwindigkeit des Mediums 4 in dem Messbereich 3c des Messrohrs 3, unter der Voraussetzung einer gleichbleibenden Magnetfeldstärke B.

Ein Messelektrodenpaar 6a, 6b ist im Messbereich 3c des Messrohrs 3 zum Abgreifen der in dem Medium 4 im Messrohr 3 induzierten elektrischen Spannung Uind angeordnet. Die Verbindungslinie zwischen den beiden Messelektroden 6a, 6b verläuft sowohl senkrecht zur Strömungsrichtung des Mediums wie auch senkrecht zu den Feldlinien des Magnetfeldes B, um einen maximalen Messeffekt zu erzielen. Die Messelektroden 6a, 6b sind elektrisch isoliert von der Wandung des Messrohrs 3 in die Wandung des Messrohrs 3 eingelassen. Eine Steuer- und Auswerteeinheit 7 ermittelt im Durchflussmessbetrieb aus der gemessenen induzierten elektrischen Spannung Uind einen Durchflussmesswert F. Die Darstellung in Fig. 1 (wie auch in den nachfolgenden Figuren) ist tatsächlich sehr schematisch. So ist nicht im Einzelnen dargestellt, wie die Messwerte der Elektrodenspannungen Ue1, Ue2 zu der Steuer- und Auswerteeinheit 7 gelangen. Auch ist nicht ausdrücklich dargestellt, dass sich die in dem Medium 4 induzierte elektrische Spannung Uind aus der Differenz der beiden Messelektrodenspannungen Ue1, Ue2 ergibt, darauf kommt es jedoch im Einzelnen auch nicht an oder ist dem Fachmann ohnehin bekannt.

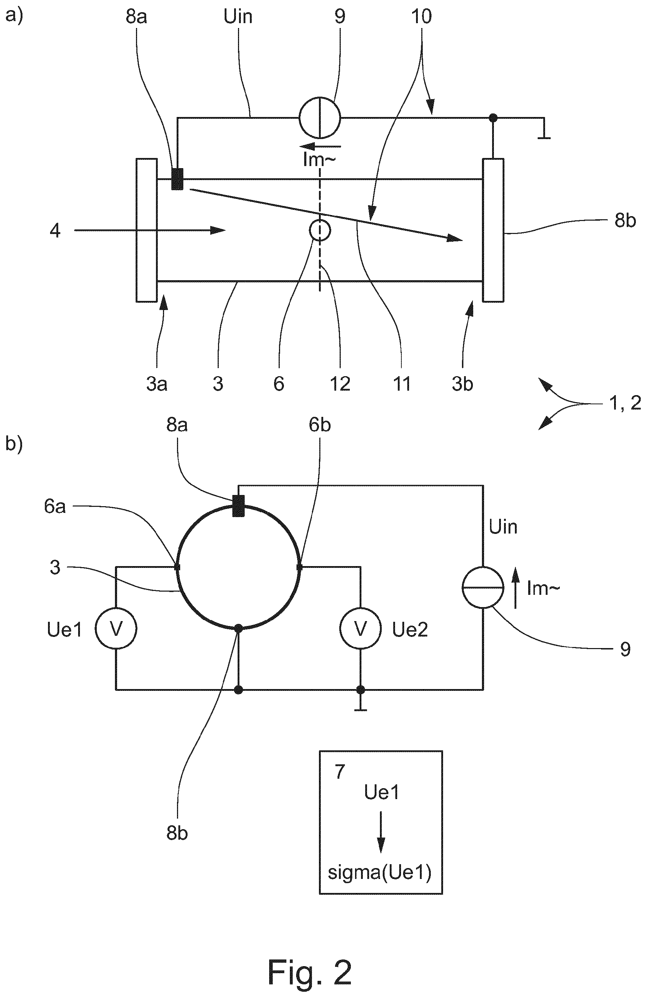

In den nachfolgenden Fig. 2 bis 5 sind in verschiedenen Aspekten ein Verfahren 1 zum Betreiben eines magnetisch-induktiven Durchflussmessgeräts 2 und ein entsprechendes magnetisch-induktives Durchflussmessgerät 2 dargestellt. Im Vordergrund steht jedoch nicht die Durchflussmessung, sondern die Bestimmung der Leitfähigkeit sigma des das magnetisch-induktive Durchflussmessgerät 2 durchströmenden Mediums 4, im Wesentlichen geht es also um einen von dem Durchflussmessbetrieb verschiedenen Leitfähigkeitsmessbetrieb.

Den Ausführungsbeispielen in den Figuren 2 bis 5 ist gemeinsam, dass der Übersichtlichkeit halber die Magnetfelderzeugungseinrichtung nicht dargestellt ist. Ebenfalls gemeinsam ist den Ausführungsbeispielen, dass im Bereich des Messrohrs 3 mit Kontakt zum Medium 4 zumindest bei vollständig mediumgefülltem Messrohr 3 eine erste Stromkreiselektrode 8a und eine zweite Stromkreiselektrode 8b angeordnet sind. Die Stromkreiselektroden 8a, 8b sind außerhalb des Messrohres 3 mit einer Stromquelle 9 verbunden. In einem Leitfähigkeitsmessbetrieb werden die Stromkreiselektroden 8a, 8b demzufolge mit einem Messstrom Im beaufschlagt, wobei die Stromkreiselektroden 8a, 8b so angeordnet sind, dass sich ein Leitfähigkeitsstromkreis 10 zumindest bei vollständig mediumgefülltem Messrohr 3 im Medium 4 über einen Mediumstrompfad 11 schließt.

In Fig. 2a verläuft der Mediumstrompfad 11 von der ersten Stromkreiselektrode 8a, die elektrisch isoliert in das Messrohr 3 eingelassen ist, zu der als Flansch ausgebildeten zweiten Stromkreiselektrode 8b (von links oben nach rechts), wobei der Flansch auch elektrisch isoliert ist gegenüber dem anschließenden Bereich des Messrohrs 3. Die Positionen der Stromkreiselektroden 8a, 8b sind so gewählt, dass der Mediumstrompfad 11 den Strömungsquerschnitt 12 des Messrohrs 3, in dem die Messelektroden 6a, 6b liegen, passiert, sodass sich ein elektrischer Spannungsabfall zwischen den Stromkreiselektroden 8a, 8b im Medium ergibt und diese elektrische Spannung im Medium 4 von den Messelektroden 6a, 6b detektierbar ist. Die Stromkreiselektroden 8a, 8b sind so angeordnet, dass der Mediumstrompfad 11 in seinem Verlauf eine axiale Erstreckung hat, also in Strömungsrichtung des Mediums, was sich als vorteilhaft für die Bestimmung der elektrischen Leitfähigkeit sigma des Mediums 4 herausgestellt hat.

Bei einem hier nicht dargestellten Ausführungsbeispiel, das sich jedoch anhand von Fig. 2a einfach erläutern lässt, sind beide Flansche, also ein- und auslaufseitiger Flansch des Messrohrs 3, als zweite Stromkreiselektrode 8b ausgebildet und demnach mit der elektrischen Gerätemasse verbunden. Der Mediumstrompfad 11 ist dann zweigeteilt, er verläuft zum einen wie in Fig. 2a eingezeichnet, zum anderen aber zusätzlich auch von der ersten Stromkreiselektrode 8a zu dem linksseitigen Flansch.

Fig. 2a zeigt nicht die messtechnische Erfassung der Messelektrodenspannungen Ue1, Ue2, dies ist jedoch in Fig. 2b schematisch gezeigt. Im Leitfähigkeitsmessbetrieb wird wenigstens eine Messelektrodenspannung Ue1, Ue2 mit wenigstens einer der Messelektroden 6a, 6b erfasst. Die Steuer- und Auswerteeinheit 7 bestimmt aus der erfassten Messelektrodenspannung Ue1, Ue2 die elektrische Leitfähigkeit sigma des Mediums 4 in dem Messrohr 3. Es ist ausreichend, eine der Messelektrodenspannungen Ue1, Ue2 zu erfassen und für die Auswertung heranzuziehen, wie in Fig. 2b gezeigt. Es können auch beide Messelektrodenspannungen Ue1, Ue2 erfasst werden und beispielsweise ihr Mittelwert zur Ermittlung der Leitfähigkeit sigma des Mediums 4 herangezogen werden. Es können auch unabhängig voneinander mit beiden der Messelektrodenspannungen Ue1, Ue2 jeweils ein Leitfähigkeit sigma des Mediums 4 ermittelt werden und der Leitfähigkeitsmittelwert als ermittelte Leitfähigkeit sigma des Mediums 4 verwendet werden.

In den Ausführungsbeispielen wird die erste Stromkreiselektrode 8a von der Stromquelle 9 auf ein Einspeisepotenzial Uin gelegt und die zweite Stromkreiselektrode 8b wird auf ein Referenzpotenzial gelegt, wobei das Referenzpotenzial das elektrische Bezugspotenzial ist, auf das bezogen auch die Messelektrodenspannungen Ue1, Ue2 gemessen werden. In den Ausführungsbeispielen ist das Referenzpotenzial gleichzeitig die elektrische Masse des Durchflussmessgeräts 2.

In den in den Figuren 2, 4 und 5 dargestellten Ausführungsbeispielen erzeugt die Stromquelle 9 einen Wechselstrom Im~ mit konstanter Amplitude als Messstrom Im, wobei die interessierende Größe der Messelektrodenspannung Ue1, Ue2 im Leitfähigkeitsmessbetrieb die Amplitude der Messelektrodenspannung Ue1, Ue2 ist. Das Arbeiten mit einem Messstrom Im~ wechselnder Polarität ist aus ähnlichen Gründen vorteilhaft, weshalb auch das Arbeiten mit induzierten Spannungen mit wechselnder Polarität im Medium vorteilhaft ist, es werden beispielsweise unerwünschte elektrochemische Effekte unterdrückt, die sich sonst bei der Anwendung von Gleichgrößen ergeben können.

Während des Leitfähigkeitsmessbetriebs wird der Durchflussmessbetrieb ausgesetzt, insbesondere wird die Magnetfelderzeugungseinrichtung 5 nicht bestromt, sodass kein Magnetfeld B erzeugt wird und damit auch keine störende Induktionsspannung in dem Medium 4 auftreten kann.

Um im Leitfähigkeitsmessbetrieb aus einer erfassten Messelektrodenspannung Ue1, Ue2 auf die elektrische Leitfähigkeit sigma des Mediums 4 schließen zu können, muss ein entsprechender Zusammenhang zwischen diesen Größen bekannt sein, also zum Beispiel sigma(Ue1), sigma(Ue2) oder sigma(Ue1, Ue2). Dieser Zusammenhang zwischen der im Leitfähigkeitsmessbetrieb erfassten Messelektrodenspannung Ue1, Ue2 und der elektrischen Leitfähigkeit sigma des Mediums 4 in dem Messrohr 3 ist in den dargestellten Ausführungsbeispielen für das Verfahren 1 und das Durchflussmessgerät 2 durch Kalibrierung des Durchflussmessgeräts 2 mit mehreren Medien 4 unterschiedlicher, aber bekannter elektrischer Leitfähigkeit sigma erfolgt. Die Kalibrierung kann für einen Gerätetyp aber auch geräteindividuell erfolgen.

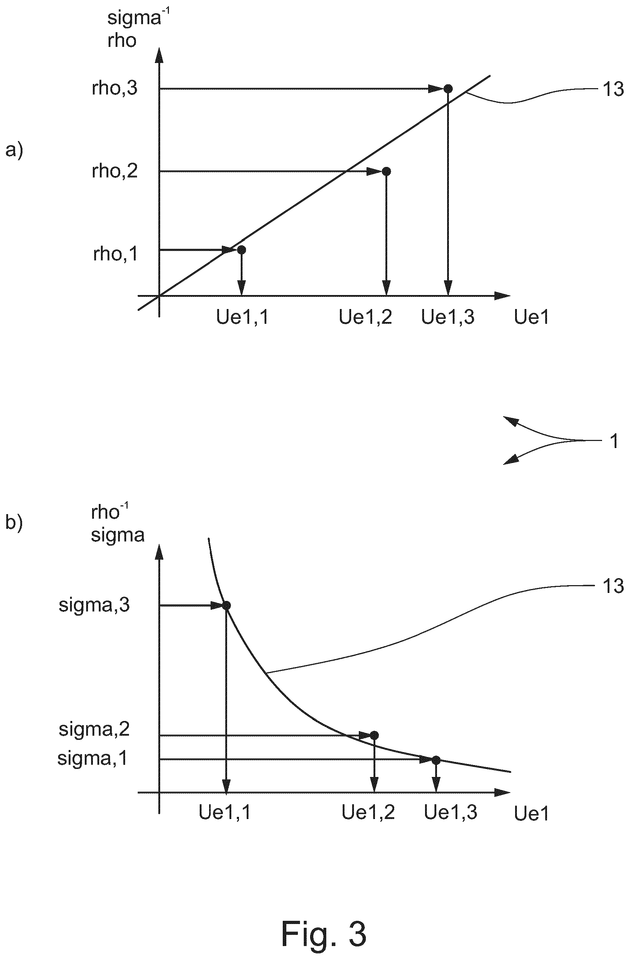

Wie in Fig. 3a gezeigt, wird als mathematische Annäherung des Zusammenhangs zwischen der im Leitfähigkeitsmessbetrieb erfassten Messelektrodenspannung Ue1 und der elektrischen Leitfähigkeit sigma des Mediums 4 in dem Messrohr 3 ein linearer Zusammenhang gewählt zwischen der Messelektrodenspannung Ue1 und dem Kehrwert rho der elektrischen Leitfähigkeit sigma des Mediums 4 - also dem spezifischen elektrischen Widerstand rho des Mediums 4 - . Dazu werden mehrere Kalibrierwertepaare (rho,1; Ue1,1), (rho,2; Ue1,2), (rho,3; Ue1,3) von Messelektrodenspannung Ue1,1; Ue1,2; Ue1,3 und zugehörigem Kehrwert rho,1; rho,2; rho,3 der Leitfähigkeit sigma des Mediums 4 ermittelt und eine Ausgleichskurve 13, vorliegend eine Ausgleichsgerade, durch die Kalibrierwertepaare gelegt. Die Ausgleichsgerade in Fig. 3a zeigt einen proportionalen Zusammenhang zwischen der Messelektrodenspannung Ue1 und dem Kehrwert rho der elektrischen Leitfähigkeit sigma des Mediums 4. Der Zusammenhang ist denkbar einfach mathematisch zu beschreiben. Es kann auch vorkommen, dass die Ausgleichgerade einen Nullpunkt-Offset hat, also keine Nullpunktgerade ist, gleichwohl ist der Zusammenhang dann linear und ebenfalls einfach zu beschreiben und auch zu berechnen. Jedenfalls ist der Zusammenhang einfacher als der in Fig. 3b gezeigte und in etwa umgekehrt proportionale Zusammenhang wie auch dessen mathematische Formulierung als nichtlineare Ausgleichskurve 13.

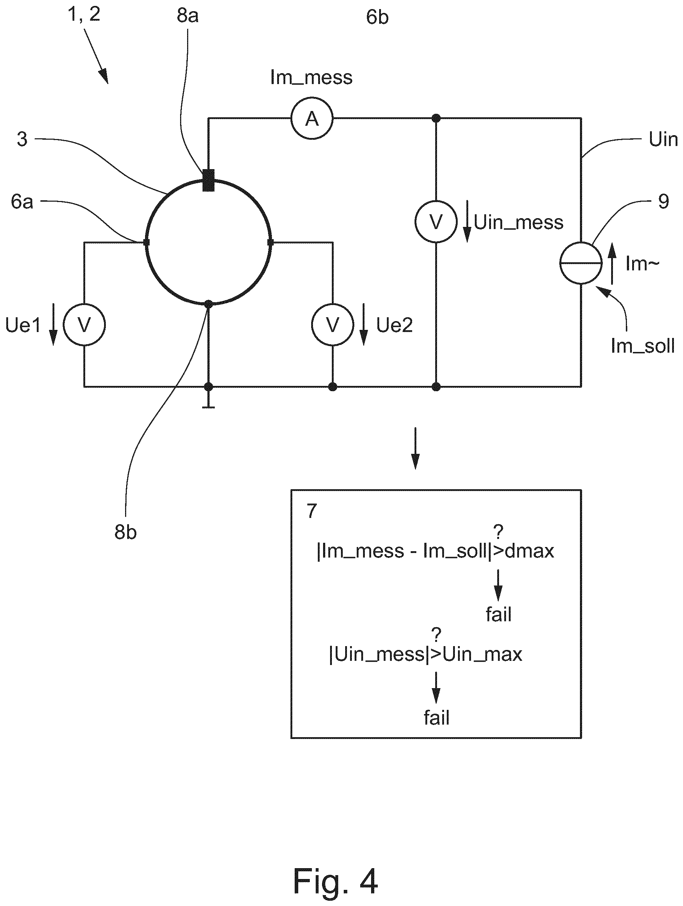

Fig. 4 zeigt, dass im Leitfähigkeitsmessbetrieb der von der Stromquelle 9 abgegebene Messstrom Im - in diesem Fall ein Wechselstrom Im~ - messtechnisch erfasst wird. Die Steuer- und Auswerteeinheit 7 ist so ausgebildet, dass bei Abweichung des gemessenen Messstroms Im_mess von einem der Stromquelle 9 vorgegebenen Soll-Messstrom Im_soll die Leitfähigkeitsmessung als fehlerhaft erkannt wird. Der erkannte Fehlerstatus (fail) wird im vorliegenden Fall nach außen erkennbar gemacht durch Signalisierung auf einer Anzeige. Da die Stromquelle 9 einen Wechselstrom Im~ ausgibt, handelt es sich bei dem gemessenen Messstrom Im_mess um die Amplitude des Wechselstroms und bei dem Sollwert Im_soll ebenfalls um eine Vorgabe für die Amplitude des Wechselstroms Im.

Ferner zeigt das Ausführungsbeispiel gemäß Fig. 4, dass im Leitfähigkeitsmessbetrieb die Einspeisespannung Uin an der ersten Stromkreiselektrode 8a messtechnisch erfasst wird. Die Einspeisespannung Uin ist das Einspeisepotenzial Uin bezogen auf das Referenzpotenzial, also das Massepotenzial der Schaltung. In dem Fall, dass die gemessene Einspeisespannung Uin_mess einen vorgegebenen Maximalwert für die Einspeisespannung Uin_max überschreitet, wird die Leitfähigkeitsmessung als fehlerhaft erkannt und ebenfalls als fehlerhaft (fail) angezeigt.

Für alle dargestellten Ausführungsbeispiele (außer Fig. 1) gilt, dass die Steuer- und Auswerteeinheit 7 so ausgestaltet ist, dass sie in dem Leitfähigkeitsmessbetrieb das in den Figuren dargestellte Verfahren 1 ausführt.

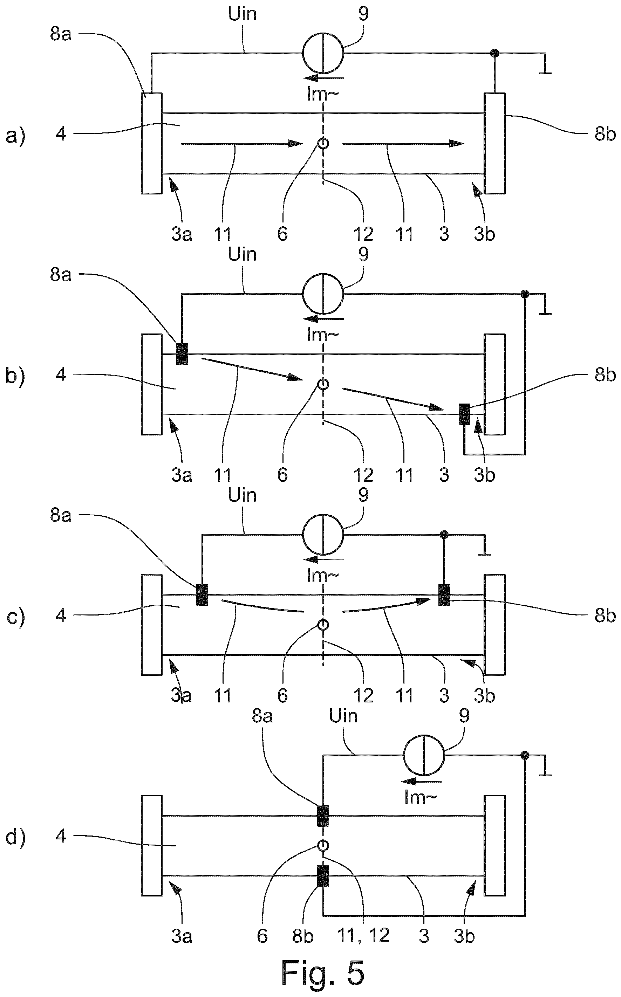

Die Fig. 5a bis 5d zeigen verschiedene Varianten der Umsetzung der Stromkreiselektroden 8a, 8b im Bereich des Messrohrs 3. Grundsätzlich müssen die Stromkreiselektroden 8a, 8b so ins Messrohr 3 eingesetzt oder in dem Messrohr 3 ausgebildet sein, dass sie nicht durch das Messrohr 3 kurzgeschlossen werden, denn der Leitfähigkeitsstromkreis 10 muss über das Medium 4, dort über den Mediumstrompfad 11 im Medium 4, geschlossen werden, damit die Leitfähigkeitsmessung funktioniert.

In Fig. 2 ist bereits ein magnetisch-induktives Durchflussmessgerät 2 gezeigt worden, bei dem eine der Stromkreiselektroden 8b als endseitiger leitfähiger Flansch des Messrohrs 3 ausgebildet ist. Bei dem magnetisch-induktiven Durchflussmessgerät 2 gemäß Fig. 5a sind beide Stromkreiselektroden 8a, 8b als endseitiger leitfähiger Flansch des Messrohrs 3 ausgebildet, die erste Stromkreiselektrode 8a ist als der eine Flansch im Einströmbereich 3a angeordnet und die zweite Stromkreiselektrode 8b ist als der andere Flansch im Ausströmbereich 3b des Messrohrs 3 angeordnet. Hier sind die Flansche nach außen hin elektrisch isoliert, nicht jedoch innenseitig, sodass elektrischer Kontakt zum Medium 4 gewährleistet ist.

Bei den magnetisch-induktiven Durchflussmessgeräten 2 gemäß den Fig. 2a, 5b und 5c ist wenigstens eine der Stromkreiselektroden 8a im Bereich des Messrohrs 3 axial versetzt zu einer Messelektrodenebene 12, in der die Messelektroden 6a, 6b angeordnet sind und welche Messelektrodenebene 12 senkrecht zur axialen Erstreckung des Messrohrs 4 verläuft, angeordnet, die Messelektroden 6a, 6b liegen zudem zwischen dem Einströmbereich 3a und dem Ausströmbereich 3b. Bei den Ausführungsbeispielen nach den Fig. 5b und 5c trifft dies sogar auf beide der Stromkreiselektroden 8a, 8b zu. Die in diesen Ausführungsbeispielen gezeigte Positionierung der Stromkreiselektroden 8a, 8b geht zwar mit einem zusätzlichen konstruktiven Aufwand einher, da die Stromkreiselektroden 8a, 8b in die Wandung des Messrohrs 3 elektrisch isoliert und auch die mechanischen Festigkeitsanforderungen und die fluiden Dichtigkeitsanforderungen erfüllend eingebracht werden müssen. Jedoch bietet dies auch die Möglichkeit, die Stromkreiselektroden 8a, 8b besonders geschützt unterzubringen, sowohl gegen Kontakt von außen (da das Messrohr 3 üblicherweise von einem Gehäuse umgeben ist) wie auch gegen Kontakt von innerhalb des Messrohres, beispielsweise durch abrasives Medium, da die Stromkreiselektroden 8a. 8b bündig abschließend mit der Messrohrwand oder sogar zurückspringend montiert werden können.

Bei dem magnetisch-induktiven Durchflussmessgerät 2 gemäß Fig. 5d sind die Stromkreiselektroden 8a, 8b in der Messelektrodenebene 12 angeordnet. Die Verbindungslinie zwischen den Stromkreiselektroden 8a, 8b steht senkrecht auf der Verbindungslinie zwischen den Messelektroden 6a, 6b, sodass der Mediumstrompfad, über den die Einspeisespannung Uin abfällt, unmittelbar die Messelektroden 6a, 6b passiert. Da die Messelektroden 6a, 6b mittig zwischen dem Einströmbereich 3a und dem Ausströmbereich 3b des Messrohrs 3 angeordnet sind, liegen auch die Stromkreiselektroden 8a, 8b mittig zwischen dem Einströmbereich 3a und dem Ausströmbereich 3b des Messrohrs 3.

Die Messelektroden 6a, 6b und die Stromkreiselektroden 8a, 8b liegen auf einer Umfangslinie des Messrohrs 3, was gewisse fertigungstechnische Vorteile mit sich bringt. Interessanterweise lassen sich aber mit den Ausgestaltungen, bei denen die Stromkreiselektroden 8a, 8b axial, also in Strömungsrichtung des Mediums versetzt zu den Messelektroden 6a, 6b und damit auch der Messelektrodenebene 12 angeordnet sind, sodass auch der Mediumstrompfad 11 eine axiale Erstreckungskomponente im Messrohr 3 hat, bessere Ergebnisse hinsichtlich der Bestimmung der elektrischen Leitfähigkeit sigma des Mediums 4 erzielen, was auf die anderen Ausführungsbeispiele durchgehend zutrifft, also auf die magnetisch-induktiven Durchflussmessgeräte 2 gemäß den Fig. 2 und 5a bis 5c.

### Bezugszeichen

- 1: Verfahren zum Betreiben eines magnetisch-induktiven Durchflussmessgeräts
- 2: magnetisch-induktives Durchflussmessgerät
- 3: Messrohr
- 3a: Einströmbereich
- 3b: Ausströmbereich
- 3c: Messbereich
- 4: Medium
- 5: Magnetfelderzeugungseinrichtung
- 6a, 6b: Messelektroden, Messelektrodenpaar
- 7: Steuer- und Auswerteeinheit
- 8a, 8b: erste und zweite Stromkreiselektrode
- 9: Stromquelle
- 10: Leitfähigkeitsstromkreis
- 11: Mediumstrompfad im Leitfähigkeitsstromkreis
- 12: Messelektrodenebene, in der die Messelektroden liegen
- 13: Ausgleichskurve

- B: Magnetfeld
- Uind: im Medium induzierte elektrische Spannung
- F: Durchflussmesswert
- Im: Messstrom
- Im~: Wechsel-Messstrom
- Ue1, Ue2: Messelektrodenspannungen
- sigma: elektrische Leitfähigkeit (Konduktivität) des Mediums
- rho: spezifischer elektrischer Widerstand des Mediums
- Uin: Einspeisepotenzial oder Einspeisespannung bezogen auf Referenzpotenzial

## Patentansprüche

1. Verfahren (1) zum Betreiben eines magnetisch-induktiven Durchflussmessgeräts (2), wobei das magnetisch-induktive Durchflussmessgerät (2) wenigstens ein Messrohr (3) mit einem Einströmbereich (3a), einem Ausströmbereich (3b) und mit einem zwischen dem Einströmbereich (3a) und dem Ausströmbereich (3b) liegenden Messbereich (3c) zum Führen eines strömenden Mediums (4) durch das Durchflussmessgerät (2), wenigstens eine Magnetfelderzeugungseinrichtung (5) zum Erzeugen eines das Messrohr (3) im Messbereich (3c) senkrecht zur Strömungsrichtung des Mediums (4) durchsetzenden Magnetfeldes (B), wenigstens ein Messelektrodenpaar (6a, 6b) im Messbereich (3c) des Messrohrs (3) zum Abgreifen einer in dem Medium (4) im Messrohr (3) induzierten elektrischen Spannung (Uind), und wenigstens eine Steuer- und Auswerteeinheit (7) umfasst, die in einem Durchflussmessbetrieb aus der gemessenen induzierten elektrischen Spannung (Uind) einen Durchflussmesswert (F) ermittelt,
**dadurch gekennzeichnet,**
**dass** im Bereich des Messrohrs (3) mit Kontakt zum Medium zumindest bei vollständig mediumgefüllten Messrohr (3) eine erste Stromkreiselektrode (8a) und eine zweite Stromkreiselektrode (8b) angeordnet sind, dass die Stromkreiselektroden (8a, 8b) außerhalb des Messrohres (3) mit einer Stromquelle (9) verbunden sind und in einem Leitfähigkeitsmessbetrieb mit einem Messstrom (Im) beaufschlagt werden, wobei die Stromkreiselektroden (8a, 8b) so angeordnet sind, dass sich ein Leitfähigkeitsstromkreis (10) zumindest bei vollständig mediumgefülltem Messrohr (3) im Medium (4) über einen Mediumstrompfad (11) schließt, wobei der Mediumstrompfad (11) den Strömungsquerschnitt des Messrohrs (3), in dem die Messelektroden (6a, 6b) liegen, passiert, sodass sich ein elektrischer Spannungsabfall zwischen den Stromkreiselektroden (8a, 8b) im Medium ergibt,
**dass** im Leitfähigkeitsmessbetrieb wenigstens eine Messelektrodenspannung (Uel, Ue2) mit wenigstens einer der Messelektroden (6a, 6b) erfasst wird und die Steuer- und Auswerteeinheit (7) aus der erfassten Messelektrodenspannung (Uel, Ue2) die elektrische Leitfähigkeit (sigma) des Mediums (4) in dem Messrohr (3) bestimmt.

2. Verfahren (1) nach Anspruch (1), **dadurch gekennzeichnet, dass** die erste Stromkreiselektrode (8a) von der Stromquelle (9) auf ein Einspeisepotenzial (Uin) gelegt wird und die zweite Stromkreiselektrode (8b) auf ein Referenzpotenzial gelegt wird, insbesondere wobei das Referenzpotenzial das elektrische Bezugspotenzial ist, auf das bezogen auch die Messelektrodenspannungen (Uel, Ue2) gemessen werden.

3. Verfahren (1) nach Anspruch 1 oder 2, **dadurch gekennzeichnet, dass** die Stromquelle (9) einen Wechselstrom (Im~) mit konstanter Amplitude oder einen Gleichstrom mit konstanter Höhe als Messstrom (Im) erzeugt, insbesondere wobei die interessierende Größe der Messelektrodenspannung (Uel, Ue2) im Leitfähigkeitsmessbetrieb die Amplitude der Messelektrodenspannung (Uel, Ue2) oder die Höhe der Messelektrodenspannung (Uel, Ue2) ist.

4. Verfahren (1) nach einem der Ansprüche 1 bis 3, **dadurch gekennzeichnet, dass** während des Leitfähigkeitsmessbetriebs der Durchflussmessbetrieb ausgesetzt wird, insbesondere die Magnetfelderzeugungseinrichtung (5) nicht bestromt wird, sodass kein Magnetfeld (B) erzeugt wird.

5. Verfahren (1) nach einem der Ansprüche 1 bis 4, **dadurch gekennzeichnet, dass** der Zusammenhang zwischen der im Leitfähigkeitsmessbetrieb erfassten Messelektrodenspannung (Uel, Ue2) und der elektrischen Leitfähigkeit (sigma) des Mediums (4) in dem Messrohr (3) durch Kalibrierung des Durchflussmessgeräts (2) mit mehreren Medien (4) unterschiedlicher elektrischer Leitfähigkeit (sigma) erfolgt.

6. Verfahren (1) nach Anspruch 5, **dadurch gekennzeichnet, dass** als mathematische Annäherung des Zusammenhangs zwischen der im Leitfähigkeitsmessbetrieb erfassten Messelektrodenspannung (Uel, Ue2) und der elektrischen Leitfähigkeit (sigma) des Mediums (4) in dem Messrohr (3) ein linearer Zusammenhang gewählt wird zwischen der Messelektrodenspannung (Ue1, Ue2) und dem Kehrwert (rho) der elektrischen Leitfähigkeit (sigma) des Mediums (4), insbesondere wobei durch mehrere Kalibrierwertepaare von Messelektrodenspannung (Uel, Ue2) und zugehörigem Kehrwert (rho) der Leitfähigkeit (sigma) des Mediums (4) eine Ausgleichskurve, insbesondere eine Ausgleichgerade (13), gelegt wird und die Ausgleichskurve verwendet wird zur Bestimmung der elektrischen Leitfähigkeit (sigma) des Mediums (4) in Abhängigkeit von der erfassten Messelektrodenspannung (Uel, Ue2) im Leitfähigkeitsmessbetrieb.

7. Verfahren (1) nach einem der Ansprüche 1 bis 6, **dadurch gekennzeichnet, dass** im Leitfähigkeitsmessbetrieb der von der Stromquelle (9) abgegebene Messstrom (Im) messtechnisch erfasst wird und bei Abweichung des gemessenen Messstroms (Im_mess) von einem der Stromquelle (9) vorgegebenen Soll-Messstrom (Im_soll) die Leitfähigkeitsmessung als fehlerhaft erkannt wird, insbesondere wobei der erkannte Fehlerstatus nach außen signalisiert wird, insbesondere auf einer Anzeige angezeigt oder als Fehlernachricht über eine Signalschnittstelle nach außerhalb des Durchflussmessgeräts (2) übertragen wird.

8. Verfahren (1) nach einem der Ansprüche 1 bis 7, **dadurch gekennzeichnet, dass** im Leitfähigkeitsmessbetrieb die Einspeisespannung (Uin) an der ersten Stromkreiselektrode (8a) messtechnisch erfasst wird und in dem Fall, dass die gemessene Einspeisespannung (Uin_mess) einen vorgegebenen Maximalwert für die Einspeisespannung (Uin_max) überschreitet, die Leitfähigkeitsmessung als fehlerhaft erkannt wird, insbesondere wobei der erkannte Fehlerstatus nach außen signalisiert wird, insbesondere auf einer Anzeige angezeigt oder als Fehlernachricht über eine Signalschnittstelle nach außerhalb des Durchflussmessgeräts übertragen wird.

9. Verfahren (1) nach einem der Ansprüche 1 bis 8, **dadurch gekennzeichnet, dass** der Messstrom (Im) mit einem charakteristischen Zeitverlauf versehen wird und überprüft wird, ob im Leitfähigkeitsmessbetrieb die erfasste Messelektrodenspannung (Uel, Ue2) einen entsprechenden charakteristischen Zeitverlauf hat, wobei bei Abweichung der Zeitverläufe von Messstrom (Im) und Messelektrodenspannung (Uel, Ue2) die Leitfähigkeitsmessung als fehlerhaft erkannt wird, insbesondere wobei der erkannte Fehlerstatus nach außen signalisiert wird, insbesondere auf einer Anzeige angezeigt oder als Fehlernachricht über eine Signalschnittstelle nach außerhalb des Durchflussmessgeräts (2) übertragen wird.

10. Verfahren (1) nach einem der Ansprüche 1 bis 9, **dadurch gekennzeichnet, dass** im Leitfähigkeitsmessbetrieb zwei Messelektrodenspannungen (Uel, Ue2) mit den beiden Messelektroden (6a, 6b) erfasst werden und die beiden Messelektrodenspannungen (Uel, Ue2) miteinander verglichen werden, wobei bei Abweichung der beiden Messelektrodenspannungen (Uel, Ue2) über eine Abweichungsschwelle hinaus die Leitfähigkeitsmessung als fehlerhaft erkannt wird, insbesondere wobei der erkannte Fehlerstatus nach außen signalisiert wird, insbesondere auf einer Anzeige angezeigt oder als Fehlernachricht über eine Signalschnittstelle nach außerhalb des Durchflussmessgeräts (2) übertragen wird.

11. Magnetisch-induktives Durchflussmessgerät (2), mit wenigstens einem Messrohr (3) mit einem Einströmbereich (3a), einem Ausströmbereich (3b) und mit einem zwischen dem Einströmbereich (3a) und dem Ausströmbereich (3b) liegenden Messbereich (3c) zum Führen eines strömenden Mediums (4) durch das Durchflussmessgerät (2), mit wenigstens einer Magnetfelderzeugungseinrichtung (5) zum Erzeugen eines das Messrohr (3) im Messbereich (3c) senkrecht zur Strömungsrichtung des Mediums (4) durchsetzenden Magnetfeldes (B), mit wenigstens einem Messelektrodenpaar (6a, 6b) im Messbereich (3c) des Messrohrs (3) zum Abgreifen einer in dem Medium (4) im Messrohr (3) induzierten elektrischen Spannung (Uind), und mit wenigstens einer Steuer- und Auswerteeinheit (7), die ein einem Durchflussmessbetrieb aus der gemessenen induzierten elektrischen Spannung (Uind) einen Durchflussmesswert (F) ermittelt,
**dadurch gekennzeichnet,**
**dass** im Bereich des Messrohrs (3) mit Kontakt zum Medium (4) zumindest bei vollständig mediumgefüllten Messrohr (3) eine erste Stromkreiselektrode (8a) und eine zweite Stromkreiselektrode (8b) angeordnet sind, dass die Stromkreiselektroden (8a, 8b) außerhalb des Messrohres (3) mit einer Stromquelle (9) verbunden sind und die Stromquelle(9) in einem Leitfähigkeitsmessbetrieb die Stromkreiselektroden (8a, 8b) mit einem Messstrom (Im) beaufschlagt, wobei die Stromkreiselektroden (8a, 8b) so angeordnet sind, dass sich ein Leitfähigkeitsstromkreis (10) zumindest bei vollständig Medium gefülltem Messrohr (3) im Medium (4) über einen Mediumstrompfad (11) schließt, wobei der Mediumstrompfad (11) den Strömungsquerschnitt (12) des Messrohrs (3), in dem die Messelektroden (6a, 6b) liegen, passiert und dass die Steuer- und Auswerteeinheit (7) so ausgestaltet ist, dass sie in dem Leitfähigkeitsmessbetrieb das Verfahren (1) gemäß einem der Ansprüche 1 bis 10 ausführt.

12. Magnetisch-induktives Durchflussmessgerät (2) nach Anspruch 11, **dadurch gekennzeichnet, dass** wenigstens eine der Stromkreiselektroden (8a, 8b) als endseitiger leitfähiger Flansch des Messrohrs (3) ausgebildet ist.

13. Magnetisch-induktives Durchflussmessgerät (2) nach Anspruch 12, **dadurch gekennzeichnet, dass** beide Stromkreiselektroden (8a, 8b) als endseitiger leitfähiger Flansch des Messrohrs (3) ausgebildet sind, wobei die erste Stromkreiselektrode (8a) als der eine Flansch im Einströmbereich (3a) angeordnet ist und wobei die zweite Stromkreiselektrode (8b) als der andere Flansch im Ausströmbereich (3b) des Messrohrs (3) angeordnet ist.

14. Magnetisch-induktives Durchflussmessgerät (2) nach Anspruch 12, **dadurch gekennzeichnet, dass** eine der Stromkreiselektroden (8a, 8b) sowohl als leitfähiger Flansch im Einströmbereich (3a) wie auch als leitfähiger Flansch im Ausströmbereich (3b) des Messrohrs (3) ausgebildet ist.

15. Magnetisch-induktives Durchflussmessgerät (2) nach einem der Ansprüche 11, 12 oder 14, **dadurch gekennzeichnet, dass** wenigstens eine der Stromkreiselektroden (8a) im Bereich des Messrohrs (3) axial versetzt zu einer Messelektrodenebene (12), in der die Messelektroden (6a, 6b) angeordnet sind und die senkrecht zur axialen Erstreckung des Messrohrs (4) verläuft, angeordnet ist, insbesondere zwischen dem Einströmbereich (3a) und dem Ausströmbereich (3b), insbesondere wobei beide der Stromkreiselektroden (8a, 8b) im Bereich des Messrohrs (3) axial versetzt zu der Messelektrodenebene (12) und zwischen dem Einströmbereich (3a) und dem Ausströmbereich (3b) angeordnet sind.

16. Magnetisch-induktives Durchflussmessgerät (2) nach einem der Ansprüche 11, 12 oder 14, **dadurch gekennzeichnet, dass** eine der Stromkreiselektroden (8a) in der Messelektrodenebene (12) angeordnet ist, insbesondere beide Stromkreiselektroden (8a, 8b) in der Messelektrodenebene angeordnet sind.
